# FASCICULE DE BREVET EUROPEEN

(11) **EP 2 721 347 B1**
(45) Date de publication et mention de la délivrance du brevet: **05.08.2015**
(21) Numéro de dépôt: 12734965.2
(22) Date de dépôt: 19.06.2012
(51) Int. Cl.: F23M 20/00

(54) **PROCÉDÉ D'INJECTION DE CARBURANT DANS UNE CHAMBRE DE COMBUSTION D'UNE TURBINE À GAZ ET SYSTÈME D'INJECTION POUR SA MISE EN OEUVRE**
VERFAHREN ZUM EINSPRITZEN VON KRAFTSTOFF IN EINE BRENNKAMMER EINER GASTURBINE UND EINSPRITZSYSTEM ZUR UMSETZUNG DES VERFAHRENS
METHOD FOR INJECTING FUEL INTO A COMBUSTION CHAMBER OF A GAS TURBINE, AND INJECTION SYSTEM FOR IMPLEMENTING SAME

(30) Priorité: 20.06.2011 FR 1155371
(43) Date de publication de la demande: 23.04.2014
(73) Titulaire: Turbomeca, 64511 Bordes (FR)
(72) Inventeur: SAVARY, Nicolas, F-64110 Jurancon (FR); VIGNAU, Hubert, F-64800 Nay (FR); VIGUIER, Christophe, F-64800 Arros De Nay (FR); BERAT, Claude, F-64800 Igon (FR)
(74) Mandataire: Bringer, Mathieu
(86) Numéro de dépôt international: PCT/FR2012/051368
(87) Numéro de publication internationale: WO 2012/175856

(56) Documents cités:
- EP-A1- 1 030 112
- EP-A2- 1 801 503
- FR-A1- 2 948 749
- GB-A- 2 454 247
- US-A- 5 267 442

## Description

### DOMAINE TECHNIQUE

L'invention concerne un procédé d'injection de carburant dans une chambre de combustion d'une turbine à gaz - turbomoteur, turboréacteur ou groupe auxiliaire de puissance (GAP) - afin de supprimer ou, du moins limiter, les instabilités de combustions. L'invention se rapporte également à un système d'injection pour sa mise en oeuvre.

Dans une chambre de combustion de turbine à gaz, tel qu'un turbomoteur, des injecteurs montés sur un carter fournissent du carburant qui est mélangé à de l'air à l'intérieur de mélangeurs air/carburant, communément appelés tourbillonneurs, répartis sur le fond de la chambre de combustion. L'air provient du dernier étage d'un compresseur de la turbine à gaz dont une partie est introduite dans la chambre de combustion par ce tourbillonneur. Le carburant est introduit dans l'injecteur par un orifice, formé à l'extrémité d'une tubulure. L'air et le carburant sont mélangés dans les tourbillonneurs puis brûlés dans la chambre pour générer des gaz. L'énergie thermique de ces gaz est convertie en travail mécanique par l'intermédiaire de turbines et/ou en poussée via la tuyère, permettant ainsi d'assurer la propulsion de l'aéronef ou la fourniture de puissance mécanique pour une installation terrestre ou marine.

Lors de la conception d'un turbomoteur et en particulier de sa chambre de combustion, un risque important, qui ne peut être levé avant la première rotation du moteur, est la présence d'instabilités de combustion au sein de la chambre dans la plage de fonctionnement du moteur. Ces instabilités sont produites lorsque les fluctuations de combustion dans la chambre entrent en résonance avec des phénomènes physiques localisés dans celle-ci (mode propre de vibration acoustique, de vibration mécanique, instabilité d'alimentation en carburant, etc.). Ces instabilités génèrent alors des vibrations dites asynchrones car elles ne sont pas directement liées à la vitesse de rotation du moteur. Lorsqu'il y a résonnance entre un mode propre acoustique et les fluctuations de dégagement de chaleur lié à la combustion, on parle communément de couplage thermo-acoustique provoquant des instabilités de combustion.

Plus globalement, les instabilités de combustion peuvent induire des vibrations potentiellement destructrices de la structure de la chambre, voire du moteur, empêchant la certification du moteur.

### ETAT DE LA TECHNIQUE

Lorsque la présence d'instabilités de combustion est avérée, une solution classique consiste à redessiner la chambre de combustion et/ou les systèmes d'injection en fonction des impacts. Cette solution est coûteuse et induit des retards importants de réalisation et donc de certification.

Il est connu du document de brevet US 4 831 700 des moyens de lutte contre l'instabilité de combustion d'une turbine comportant une valve annulaire montée sur un épaulement de l'injecteur. Une chambre d'air interne est ainsi créée. La valve présente une tête en avancée pour contrôler le flux de carburant à partir d'un orifice formé dans l'épaulement de l'injecteur, à proximité de la sortie de carburant. Une telle architecture est complexe et repose sur une variation d'ouverture de cette valve, ce qui peut supprimer les interruptions ou les impulsions de flux de carburant. Cependant, si de tels moyens réduisent l'instabilité de combustion liée aux irrégularités de flux de carburant ils ne permettent pas de résoudre ce problème d'instabilités de combustion.

Il est par ailleurs connu du document de brevet EP 1 413 830, une configuration basée sur un diviseur d'air à extrémité conique, localisé entre l'injecteur de carburant et le tourbillonneur d'air. Le diviseur sépare le flux d'air en deux courants concentriques pour créer dans la chambre une zone de recirculation à deux voies. Pour les mêmes raisons que ci-dessus, cette solution ne supprime pas les instabilités de combustion. Les caractéristiques du préambule de la revendication 3 sont connues du document EP 1 801 503 A2.

### EXPOSÉ DE L'INVENTION

L'invention vise à réduire, voire supprimer, les instabilités de combustion, en proposant d'injecter le carburant selon un axe particulier induisant un écoulement du carburant dans le tourbillonneur qui n'est plus parfaitement à symétrie cyclique.

Plus précisément, la présente invention a pour objet un procédé d'injection de carburant dans une chambre de combustion de turbine à gaz, par un système mélangeur air/carburant selon la revendication 1. Dans ce procédé, l'injection de carburant est effectuée dans le système mélangeur selon un axe parallèle à l'axe central de ce système au sens strict, c'est-à-dire distinct de cet axe. Il est alors dit que l'axe d'injection est décentré par rapport à l'axe du mélangeur. Dans ces conditions, en absence de projection de carburant axisymétrique, la flamme de combustion n'entre plus en résonance, éliminant ou réduisant les instabilités de combustion à un niveau acceptable.

Selon des modes de réalisation particuliers :
- la chambre de combustion, agencée dans un carter, est angulairement décalée par rapport au carter, l'injection de carburant étant effectuée par un injecteur solidaire du carter et le système mélangeur étant solidaire de la chambre de combustion ; et/ou
- l'injection est décentrée dans le système mélangeur : ce mode est en particulier mis en oeuvre lorsque le système mélangeur possède un ou plusieurs degrés de liberté sur la chambre de combustion.

L'invention se rapporte également à un système mélangeur air/carburant comprenant une chambre de combustion de turbine à gaz et un carter de protection de la chambre selon la revendication 3, ce système étant apte à mettre en oeuvre le procédé ci-dessus. Ce système comporte au moins un tourbillonneur d'entrée d'air comprimé, le tourbillonneur présentant un axe de symétrie centrale, et un injecteur de carburant équipé d'une tête d'injection, présentant un axe de symétrie propre. Chaque injecteur est monté dans le tourbillonneur correspondant à l'aide de moyens de guidage, en particulier une virole à collerette montée dans une bague de retenue solidaire du tourbillohneur, de sorte que l'axe de symétrie de la tête d'injection est décentré par rapport à l'axe de symétrie centrale du tourbillonneur.

Selon des modes de réalisation particuliers :
- des moyens rendent les tourbillonneurs solidaires de la chambre et les injecteurs solidaires du carter, et des moyens de fixation à excentrement de la chambre sur le carter sont aptes à décaler angulairement la chambre par rapport au carter de sorte que les injecteurs sont décalés axialement par rapport aux tourbillonneurs correspondants ;
- chaque injecteur présente un axe principal de symétrie et une tête d'injection ayant un canal central de circulation de carburant d'axe décentré par rapport à l'axe principal du tourbillonneur ;
- la tête d'injection, avantageusement tronconique, peut être montée décentrée par rapport à un corps principal de l'injecteur, l'axe du canal de la tête étant l'axe de symétrie de la tête d'injection.

### BRÈVE DESCRIPTION DES FIGURES

D'autres caractéristiques et avantages de la présente invention apparaîtront à la lecture de l'exemple détaillé de réalisation qui suit, en référence aux figures annexées qui représentent, respectivement :
- la figure 1, une vue en coupe d'un premier exemple de système mélangeur selon l'invention présentant un injecteur d'axe parallèle et décalé par rapport à l'axe du tourbillonneur associé ;
- la figure 2, une vue schématique de la chambre de combustion protégée par un carter et présentant des moyens de fixation excentriques sur le carter aptes à décaler angulairement la chambre du carter, afin d'obtenir le décalage d'axe selon la figure 1 ; et
- les figures 3a et 3b, des vues en coupe et en perspective d'un autre exemple d'injecteur de carburant excentré, respectivement dans le tourbillonneur et hors de ce système.

### DESCRIPTION DÉTAILLÉE

Les termes « amont » et « aval » ou équivalents désignent des parties d'élément en référence à l'écoulement du carburant dans l'injecteur selon l'axe C'C.

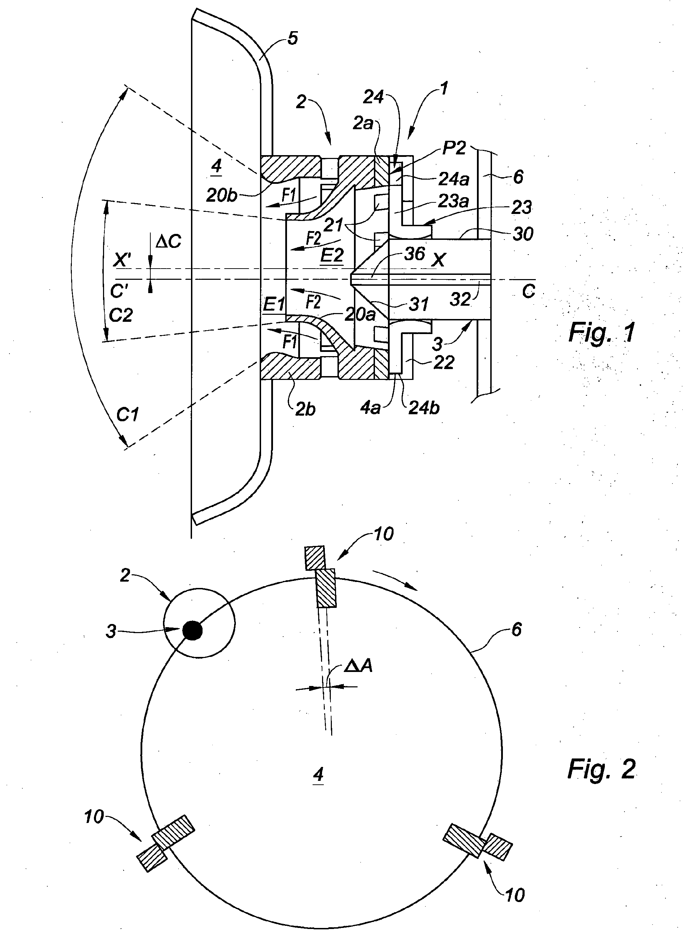

En référence à la vue en coupe de la figure 1, un exemple de mélangeur 2 selon l'invention communément appelé tourbillonneur muni d'alvéoles d'entrée d'air 21, et d'une bague de retenue 22. Cette bague permet de loger une virole de guidage 23 à collerette 23a pour un injecteur de carburant 3. Le tourbillonneur 2 est rendu solidaire de la chambre de combustion 4 à travers un tube à flamme 5. L'injecteur 3 est fixé sur le carter 6, qui enveloppe la chambre de combustion 4.

Les alvéoles d'entrée d'air 21 sont formées dans une pièce annulaire 2a qui vient s'emboîter coaxialement, selon l'axe X'X du tourbillonneur 2 et du système mélangeur 1, sur une deuxième pièce annulaire 2b. La première pièce 2a forme, à l'intérieur du tourbillonneur 2, une paroi venturi 20a et la deuxième pièce 2b une autre paroi venturi 20b. La première paroi venturi 20a pénètre la deuxième 20b de sorte à créer un espace inter-venturi E1 dans lequel circule un flux d'air F1 provenant des alvéoles 21. Ce flux forme en sortie un cône d'air C1 qui vient envelopper le cône de mélange air/carburant C2 formé par l'espace venturi interne E2 limité par la première paroi venturi 20a.

Dans cet espace E2, le flux d'air interne F2 issu des alvéoles 21 est mélangé au carburant fourni par l'injecteur 3. Plus précisément, les tourbillons d'air forment dans le venturi interne E2 des nappes d'air qui vont se chevaucher à l'entrée de la chambre de combustion 4. Dans chaque nappe, les particules d'air viennent se mixer de manière fluide et uniforme aux particules de carburant projetées par l'injecteur 3, ce qui réalise un mélange air/carburant performant.

Les flux d'air interne F1 et F2 peuvent avantageusement présenter indépendamment un écoulement tourbillonnant ou non, dans le même sens ou en sens contraire, de manière à obtenir une pulvérisation du carburation et/ou un mélange air/carburant le plus efficace possible, conforme aux exigences de performances de la chambre de combustion.

Dans l'exemple illustré, l'injecteur de carburant 3 présente un corps principal 30 cylindrique comportant une tête d'injection tronconique 31. Un conduit 32 d'amenée de carburant d'axe C'C confondu avec l'axe de symétrie de l'injecteur traverse le corps cylindrique 30 et la tête d'injection 31. Dans cet exemple de réalisation, la tête d'injection 31 présente un canal d'injection 36 dans le prolongement du conduit 32 du corps d'injecteur 30.

Le montage de l'injecteur dans le tourbillonneur 2 est réalisé via la virole de guidage 23 dont la collerette 23a vient s'insérer dans une gorge radiale 24, formée entre la bague de retenue 22 et la paroi aval P2 de la première pièce annulaire 2a. La bague 22 est solidarisée, par exemple brasée à la paroi P2, pour former le fond 4a de la gorge 24.

La collerette 23a est positionnée de manière non axisymétrique dans la gorge 24 de sorte que, en mode d'utilisation à chaud - les parties de gorge non occupées 24a et 24b ne sont pas de même profondeur - si bien que l'injecteur 3 est lui-même positionné de façon non axisymétrique par rapport au tourbillonneur 2. L'écoulement du carburant n'est plus parfaitement axisymétrique car si les axes C'C et X'X, respectivement de l'injecteur 3 et du tourbillonneur 2, restent parallèles ils ne sont pas confondus. Ils présentent donc un écart ΔC d'environ 1 mm dans l'exemple illustré. Cet écart dépend des dimensions du moteur.

Dans ces conditions, en absence de projection axisymétrique de carburant, la flamme de combustion n'entre plus en résonance : les instabilités de combustion sont éliminées ou réduites à un niveau acceptable.

Dans le cas où le tourbillonneur est solidaire du fond de chambre, ce montage non axisymétrique peut être réalisé par un décalage excentré des fixations de la chambre 4 sur le carter 6 par rapport à une position de référence en alignement nominale. Dans l'exemple de montage schématique illustré par la vue en perspective de la figure 2, des brides excentriques 10 de fixation de la chambre 4 sur le carter 6 sont utilisées. Ces brides excentriques 10 permettent de décaler angulairement la chambre selon un décalage ΔA d'environ quelques dixièmes de degrés, la valeur précise dépendant des dimensions du moteur par rapport à une position nominale de référence.

Un tel décalage induit un décalage équivalent des tourbillonneurs 2, solidaires de la chambre 4, et des injecteurs 3, solidaires du carter 6. Il s'ensuit que l'axe d'écoulement du carburant C'C des injecteurs 3 présente l'écart ΔC par rapport à l'axe X'X des tourbillonneurs 2, conforme à la figure 1.

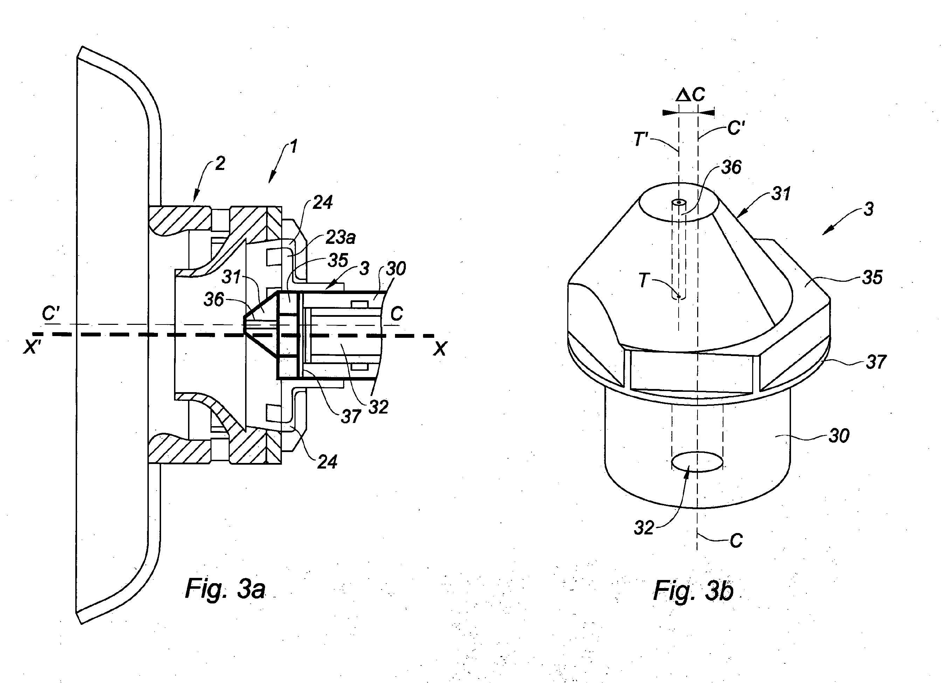

Dans un autre exemple illustré par les figures 3a et 3b, le montage non axisymétrique d'un injecteur 3 dans un tourbillonneur 2 (figure 1), peut encore être réalisé par la position décentrée de la tête d'injection 31 par rapport au corps principal 30 de l'injecteur 3.

Cette solution est particulièrement bien adaptée lorsque le tourbillonneur n'est pas directement solidaire de la chambre de combustion. En particulier, dans le cas où la virole de guidage 23, garantissant des degrés de liberté entre le tourbillonneur et l'injecteur, est déportée à l'interface entre le tourbillonneur 2 et la chambre 4, la position relative de l'axe C'C de l'injecteur de carburant 3 et XX' du tourbillonneur 2 est déterminée par la position de l'axe de la virole de guidage 23, solidaire du tourbillonneur 2.

En référence à la figure 3a, un autre exemple de réalisation est illustré avec une position décentrée de la tête d'injection 31 par rapport au corps 30 et à l'écrou de montage 35 est mise en évidence. Il apparaît alors que l'axe C'C du canal 36 d'écoulement de carburant, qui traverse la tête 31, est parallèle et décalé par rapport à l'axe du conduit 32 du corps d'injecteur 30, confondu avec l'axe X'X du tourbillonneur 2.

Le décalage d'axe est ainsi obtenu par la position de la tête d'injection 31 par rapport au corps de l'injecteur 30, alors que la collerette de guidage 23a est centrée dans la gorge radiale 24.

La vue en perspective de la figure 3b met en évidence la réalisation asymétrique de la solidarisation de la tête d'injection 31 sur l'écrou de montage 35 de la tête sur le corps 30. Le corps 30 se termine par un flasque circulaire 37 sur lequel est monté l'écrou 35 par vissage interne. Sur la figure 3b, apparaît également le décalage ΔC de l'axe T'T du canal 36 de la tête d'injection 31 et de l'axe C'C du conduit 32.

L'invention n'est pas limitée aux exemples de réalisation décrits et représentés. Il est par exemple possible d'utiliser différents types de tourbillonneur, par exemple des tourbillonneurs à plusieurs couronnes d'alvéoles en contra-rotation, ou des injecteurs à tête pyramidale ou à profil concave. L'invention s'applique bien entendu aux tourbillonneurs mono-venturi, c'est-à-dire qui ne sont pas équipés de deuxième venturi 20b associé au flux d'air F1.

Selon l'invention, il est possible de cumuler un positionnement non axisymétrique de la virole de guidage et une tête d'injection décentrée, par exemple en combinant les réalisations des figures 2 et 3a/3b. De plus, selon un autre exemple de réalisation, il est possible de fixer par brasure la bague 22 de manière excentrée de sorte que, en utilisation, la virole 23 vienne se centrer dans la bague et donc de manière non axisymétrique par rapport à l'axe du tourbillonneur. Par ailleurs, le tourbillonneur peut ne pas être fixé sur la paroi de la chambre de combustions mais, par exemple sur le carter. De plus, les moyens de guidage de l'injecteur dans le tourbillonneur peuvent être constitués par tout moyen connu, par exemple des paliers réglables, des douilles, des entretoises, etc.

## Revendications

1. Procédé d'injection de carburant par un système mélangeur air/carburant (1) présentant un axe géométrique de symétrie centrale (X'X), dans une chambre de combustion (4) de turbine à gaz, l'injection de carburant étant effectuée dans le système mélangeur (1) selon un axe (C'C) parallèle à l'axe de symétrie (X'X) de ce système (1) et distinct de cet axe (X'X), **caractérisé en ce que** la chambre de combustion (4), agencée dans un carter (6), est angulairement décalée (ΔA) par rapport au carter (6), l'injection de carburant étant effectuée par un injecteur (3) solidaire du carter (6) et le système mélangeur (1) étant solidaire de la chambre de combustion (4).

2. Procédé d'injection selon la revendication 1, dans lequel l'injection est décentrée (ΔC) dans le système mélangeur (1), en particulier lorsque le système mélangeur possède au moins un degré de liberté sur la chambre de combustion.

3. Système mélangeur air/carburant comprenant une chambre de combustion de turbine à gaz et un carter de protection de la chambre, apte à mettre en oeuvre le procédé d'injection selon l'une quelconque des revendications précédentes, comportant au moins un tourbillonneur d'entrée d'air comprimé (2), le tourbillonneur (2) présentant un axe de symétrie central (X'X), et un injecteur de carburant (3) équipé d'une tête d'injection (31) présentant un axe de symétrie propre (T'T), et dans lequel chaque injecteur (3) est monté dans le tourbillonneur (2) correspondant à l'aide de moyens de guidage (23, 22) de sorte que l'axe de symétrie (T'T) de la tête d'injection (31) est décentré par rapport à l'axe de symétrie centrale (X'X) du tourbillonneur (2), **caractérisé en ce que** des moyens de fixation à excentrement (10) de la chambre (4) sur le carter (6) sont aptes à décaler angulairement (ΔA) la chambre (4) par rapport au carter (6) de sorte que les injecteurs (3) sont décalés axialement (ΔC) par rapport aux tourbillonneurs correspondants (2).

4. Système mélangeur selon la revendication précédente, dans lequel les moyens de guidage comportent une virole (23) à collerette (23a) montée dans une bague de retenue (22) solidaire du tourbillonnneur (2).

5. Système mélangeur selon l'une des revendications 3 ou 4, dans lequel des moyens (5, 35) rendent les tourbillonneurs (2) solidaires de la chambre (4) et les injecteurs (3) solidaires du carter (6).

6. Système mélangeur selon l'une quelconque des revendications 3 à 5, dans lequel chaque injecteur (3) présente un axe principal de symétrie et une tête d'injection (31) ayant un canal central (36) de circulation de carburant d'axe (T'T) décentré par rapport à l'axe principal (X'X) du système d'injection (1).

7. Système mélangeur selon la revendication précédente, dans lequel la tête d'injection (31) est montée décentrée par rapport à un corps principal de l'injecteur (30), l'axe (T'T) du canal (36) de la tête étant l'axe de symétrie de la tête d'injection (31).

## Patentansprüche

1. Verfahren zum Einspritzen von Kraftstoff durch ein Luft/Kraftstoff-Mischersystem (1) mit einer geometrischen Punktsymmetrieachse (X'X) in eine Gasturbinen-Brennkammer (4), wobei das Einspritzen von Kraftstoff in dem Mischersystem (1) entlang einer Achse (C'C) erfolgt, die zu der Symmetrieachse (X'X) dieses Systems (1) parallel und von dieser Achse (X'X) verschieden ist, **dadurch gekennzeichnet, dass** die Brennkammer (4), die in einem Gehäuse (6) eingerichtet ist, relativ zu dem Gehäuse (6) winklig versetzt (ΔA) ist, wobei das Einspritzen von Kraftstoff durch eine Einspritzdüse (3) erfolgt, die mit dem Gehäuse (6) fest verbunden ist, und wobei das Mischersystem (1) mit der Brennkammer (4) fest verbunden ist.

2. Einspritzverfahren nach Anspruch 1, wobei das Einspritzen in dem Mischersystem (1) exzentrisch (ΔC) ist, insbesondere, wenn das Mischersystem mindestens einen Freiheitsgrad in der Brennkammer aufweist.

3. Luft/Kraftstoff-Mischersystem, umfassend eine Gasturbinen-Brennkammer und ein Gehäuse zum Schutz der Kammer, zur Durchführung des Verfahrens nach einem der vorhergehenden Ansprüche, das mindestens einen Druckluft-Eingangsverwirbeler (2) aufweist, wobei der Verwirbeler (2) eine Punktsymmetrieachse (X'X) aufweist, und umfassend eine KraftstoffEinspritzdüse (3), die mit einem Einspritzkopf (31) versehen ist, der eine eigene Symmetrieachse (T'T) aufweist, und wobei jede Einspritzdüse (3) in dem entsprechenden Verwirbeler (2) mit Hilfe von Führungsmitteln (23, 22) gelagert ist, so dass die Symmetrieachse (T'T) des Einspritzkopfs (31) relativ zu der Punktsymmetrieachse (X'X) des Verwirbelers (2) exzentrisch ist, **dadurch gekennzeichnet, dass** Mittel zur exzentrischen Befestigung (10) der Kammer (4) an dem Gehäuse (6) geeignet sind, die Kammer (4) relativ zu dem Gehäuse (6) winklig zu versetzen (ΔA), so dass die Einspritzdüsen (3) relativ zu den entsprechenden Verwirbelern (2) axial versetzt (ΔC) sind.

4. Mischersystem nach dem vorhergehenden Anspruch, wobei die Führungsmittel eine Hülse (23) mit Kragen (23a) aufweisen, die in einem Rückhaltering (22) gelagert ist, der mit dem Verwirbeler (2) fest verbunden ist.

5. Mischersystem nach einem der Ansprüche 3 oder 4, wobei Mittel (5, 35) bewirken, dass die Verwirbeler (2) mit der Kammer (4) fest verbunden sind und die Einspritzdüsen (3) mit dem Gehäuse (6) fest verbunden sind.

6. Mischersystem nach einem der Ansprüche 3 bis 5, wobei jede Einspritzdüse (3) eine Hauptsymmetrieachse und einen Einspritzkopf (31) aufweist, der einen Hauptkanal (36) für die Kraftstoffzirkulation mit relativ zu der Hauptsachse (X'X) des Einspritzsystems (1) exzentrischer Achse (T'T) aufweist.

7. Mischersystem nach dem vorhergehenden Anspruch, wobei der Einspritzkopf (31) relativ zu einem Hauptkörper der Einspritzdüse (30) exzentrisch gelagert ist, wobei die Achse (T'T) des Kanals (36) des Kopfes die Symmetrieachse des Einspritzkopfes (31) ist.

## Claims

1. Method for injecting fuel by an air/fuel mixer system (1) having a central geometric axis of symmetry (X'X), in a combustion chamber (4) of a gas turbine, the injection of fuel being effected in the mixer system (1) according to an axis (C'C) parallel to the axis of symmetry (X'X) of this system (1) and separate from this axis (X'X), **characterised in that** the combustion chamber (4), arranged in a housing (6), is angularly offset (ΔA) in relation to the housing (6), the injection of fuel being performed by an injector (3) integral with the housing (6) and the mixer system (1) being integral with the combustion chamber (4).

2. Method for injection according to Claim 1, wherein the injection is off-centre (ΔC) in the mixer system (1), in particular when the mixer system has at least one degree of freedom on the combustion chamber.

3. Air/fuel mixer system comprising a combustion chamber of a gas turbine and a housing for protection of the chamber, capable of implementing the method for injection according to any of the preceding claims, comprising at least one compressed air intake swirler (2), the swirler (2) having a central axis of symmetry (X'X), and a fuel injector (3) equipped with an injection head (31) having a separate axis of symmetry (T'T), and wherein each injector (3) is mounted in the corresponding swirler (2) with the aid of guide means (23, 22) so that the axis of symmetry (T'T) of the injection head (31) is off-centre with respect to the central axis of symmetry (X'X) of the swirler (2), **characterised in that** off-centre fixing means (10) of the chamber (4) on the housing (6) are capable of angularly offsetting (ΔA) the chamber (4) in relation to the housing (6) so that the injectors (3) are offset axially (ΔC) relative to the corresponding swirlers (2).

4. Mixer system according to the preceding claim, wherein the guide means include a ferrule (23) with a flange (23a) mounted in a retaining ring (22) integral with the swirler (2).

5. Mixer system according to either Claim 3 or Claim 4, wherein means (5, 35) render the swirlers (2) integral with the chamber (4) and render the injectors (3) integral with the housing (6).

6. Mixer system according to any of Claims 3 to 5, wherein each injector (3) has a principal axis of symmetry and an injection head (31) having a central fuel circulation channel (36) having an axis (T'T) off-centre with respect to the principal axis (X'X) of the injection system (1).

7. Mixer system according to the preceding claim, wherein the injection head (31) is mounted off-centre relative to a main body of the injector (30), the axis (T'T) of the channel (36) of the head being the axis of symmetry of the injection head (31).
